# EUROPÄISCHE PATENTSCHRIFT

(11) **EP 3 322 916 B1**
(45) Veröffentlichungstag und Bekanntmachung des Hinweises auf die Patenterteilung: **05.02.2020**
(21) Anmeldenummer: 16730688.5
(22) Anmeldetag: 15.06.2016
(51) Int. Cl.: F16H 1/32, F16H 57/00, F16D 1/08, F16D 1/10

(54) **GETRIEBE MIT ZUMINDEST EINER EXZENTERWELLE**
TRANSMISSION HAVING AT LEAST ONE ECCENTRIC SHAFT
TRANSMISSION COMPRENANT AU MOINS UN ARBRE À EXCENTRIQUE

(30) Priorität: 14.07.2015 DE 102015008855; 27.08.2015 DE 102015011074
(43) Veröffentlichungstag der Anmeldung: 23.05.2018
(73) Patentinhaber: SEW-EURODRIVE GmbH & Co. KG, 76646 Bruchsal (DE)
(72) Erfinder: HANNET, Stefan, 68723 Schwetzingen (DE); HÖHNE, Sebastian, 82256 Fürstenfeldbruck (DE)
(86) Internationale Anmeldenummer: PCT/EP2016/000995
(87) Internationale Veröffentlichungsnummer: WO 2017/008874

(56) Entgegenhaltungen:
- WO-A1-2013/065261
- CN-A- 103 742 610
- CN-Y- 201 027 913
- JP-A- 2004 270 846
- US-A- 4 025 210
- US-B1- 8 663 049

## Beschreibung

Die Erfindung betrifft ein Getriebe mit zumindest einer Exzenterwelle.

Es ist allgemein bekannt, dass die Herstellung von Exzenterwellen eines Getriebes mit einer Rundschleifmaschine ausführbar ist.

Aus der EP1225356 A1 ist eine unrunde Welle-Nabe-Verbindung bekannt.

Aus der WO 2013/065 261 A1 ist als nächstliegender Stand der Technik ein Getriebe bekannt.

Aus der CN 201 027 913 Y ist ein Planetengetriebe bekannt.

Aus der CN 103 742 610 A ist ein Getriebe bekannt.

Aus der US 8 663 049 B1 ist ein Zyklogetriebe bekannt.

Aus der US 4 025 210 A ist eine unrunde Welle bekannt.

Aus der JP 2004 270 846 A ist ein Exzentergetriebe bekannt.

Der Erfindung liegt daher die Aufgabe zugrunde, ein Getriebe mit Exzenterwelle einfach herstellbar auszubilden und die Übertragung hoher Drehmomente in einem möglichst geringen Raumberiech zu ermöglichen.

Erfindungsgemäß wird die Aufgabe bei dem Getriebe nach den in Anspruch 1 angegebenen Merkmalen gelöst.

Von Vorteil ist dabei, dass ein hohes Drehmoment auf kleinem Raumbereich übertragbar ist, weil das Umlaufrad über die besonders tragfähige Polygonverbindung mit der Exzenterwelle verbunden ist. Insbesondere im Vergleich zu einer Steckverzahnung nach DIN5480 überträgt die polygonale Welle-Nabe-Verbindung zwischen Umlaufrad und Exzenterwelle ein sehr hohes Drehmoment. Außerdem ist Herstellung einfach und kostengünstig ausführbar, da die zum Herstellen der Exzenterkernbereiche einsetzbare Werkzeugmaschine, insbesondere Schleifmaschine, auch zum Herstellen des unrunden Bereichs einsetzbar ist. Somit ist eine Schleifbearbeitung ohne zusätzliche Aufspannung und Ausrichtung ausführbar.

Erfindungsgemäß ist der Exzenterkernbereich ein kreiszylindrischer Abschnitt, der parallel aber beabstandet, insbesondere also nicht koaxial, zur Mittenachse der Exzenterwelle und/oder des Umlaufrades angeordnet ist. Von Vorteil ist dabei, dass der Exzenterkernbereich außermittig zur Wellenachse der Exzenterwelle angeordnet ist. Somit ist die Schleifbearbeitung durch dieselbe Maschine ausführbar, mit welcher auch der unrunde Bereich bearbeitbar ist.

Erfindungsgemäß ist der unrund geformte Abschnitt axial beabstandet vom Exzenterkernbereich. Von Vorteil ist dabei, dass zur Bearbeitung der Bereiche nur eine axiale Verschiebung notwendig ist.

Erfindungsgemäß ist der unrund geformte Abschnitt aus hypotrochoidalen Abschnitten zusammengesetzt. Von Vorteil ist dabei, dass eines besonders tragfähige Welle-Nabe-Verbindung wählbar ist.

Erfindungsgemäß weist das Umlaufrad eine entsprechend dem unrund geformten Abschnitt geformte Ausnehmung auf,
so dass das Umlaufrad drehfest und spielfrei mittels des unrunden Abschnittes mit der Exzenterwelle verbunden ist. Von Vorteil ist dabei, dass das Umlaufrad aufgesteckt ist auf die Exzenterwelle, insbesondere thermisch aufgeschrumpft, und somit einen spielfreie drehfeste Verbindung ermöglicht ist.

Erfindungsgemäß ist die Außenverzahnung der Scheibe mit einem Hohlrad, das gehäusebildend ist, im Eingriff. Von Vorteil ist dabei, dass keine Rollen oder Kurvenscheiben benötigt werden sondern evolventenverzahnte Scheiben verwendbar sind. Somit ist ein exaktes und präzises Abrollen der Scheibe am Umfang des Hohlrades ermöglicht.

Erfindungsgemäß ist die Außenverzahnung als Evolventenverzahnung ausgeführt. Von Vorteil ist dabei, dass eine einfache und präzise Herstellung ausführbar ist.

Bei einer vorteilhaften Ausgestaltung weist die Exzenterwelle einen zweiten Exzenterkernbereich auf, der axial beabstandet ist vom ersten Exzenterkernbereich und einen Versatz in Umfangsrichtung von 180° aufweist,
insbesondere wobei die Exzenterkernbereiche gleichartig geformt ausgeführt sind. Von Vorteil ist dabei, dass eine ausgewuchtete Bewegung ermöglicht ist.

Erfindungsgemäß ist die Exzenterwelle drehbar gelagert in einer Abtriebswelle des Getriebes aufgenommen, wobei die Achse der Exzenterwelle parallel und beabstandet zur Achse der Abtriebswelle angeordnet ist. Von Vorteil ist dabei, dass eine Abführung des Drehmoments an die Abtriebswelle in einfacher Weise ermöglicht ist.

Erfindungsgemäß ist die Abtriebswelle mittels zumindest eines Schräglagers in dem Hohlrad drehbar gelagert. Von Vorteil ist dabei, dass eine stabile Ausführung ermöglicht ist.

Erfindungsgemäß ist das Umlaufrad mit einer Sonnenradverzahnung im Eingriff, die koaxial zur Abtriebswelle angeordnet ist,
wobei das Umlaufrad, die Sonnenradverzahnung und mindestens ein weiteres Umlaufrad eine Stirnradverteilgetriebestufe bilden. Von Vorteil ist dabei, dass eine zusätzliche Übersetzungsstufe vorhanden ist bei der Aufteilung des Drehmoments von der Sonne an mehrere Umlaufräder.

Erfindungsgemäß ist die Sonnenradverzahnung drehfest und koaxial zu einem Zahnrad angeordnet, das im Eingriff mit einem von einem Elektromotor direkt oder über eine Kupplung angetriebenen Verzahnungsteil, insbesondere Ritzel, ist. Von Vorteil ist dabei, dass eine Vorstufe mit einer geeigneten Übersetzung vorgeordnet ist.

Bei einer vorteilhaften Ausgestaltung weist die Exzenterwelle einen zweiten Exzenterkernbereich auf, auf dem eine zweite außenverzahnte Scheibe des Getriebes drehbar gelagert angeordnet ist,
wobei die Außenverzahnung der zweiten Scheibe mit der Innenverzahnung des Hohlrades im Eingriff ist. Von Vorteil ist dabei, dass eine ausgewuchtete Bewegung ermöglicht ist.

Die Erfindung wird nun anhand von Abbildungen näher erläutert:

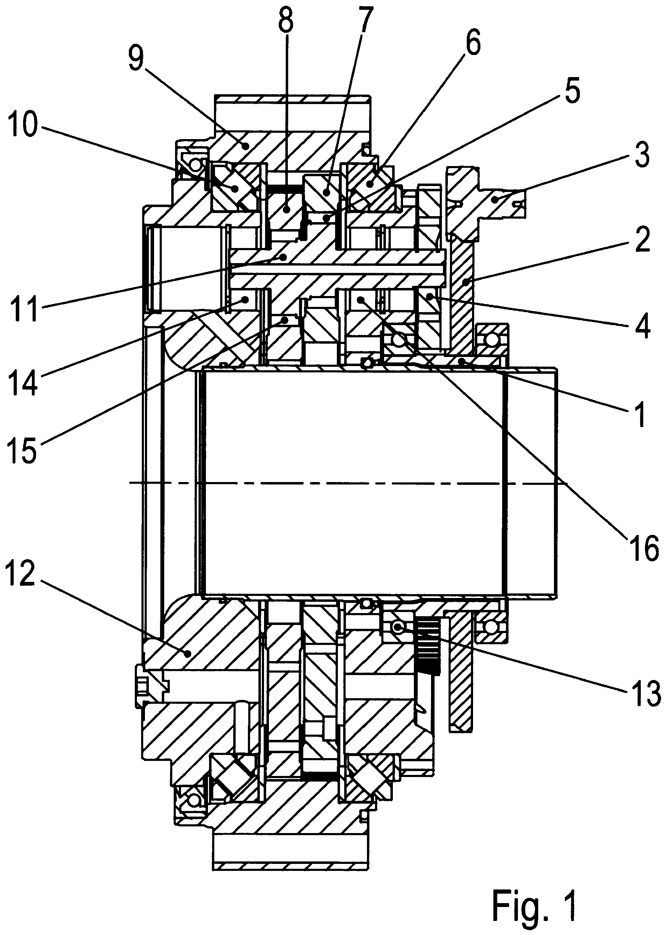

In der Figur 1 ist ein Querschnitt durch ein erfindungsgemäßes Getriebe mit Exzenterwellen 11 gezeigt.

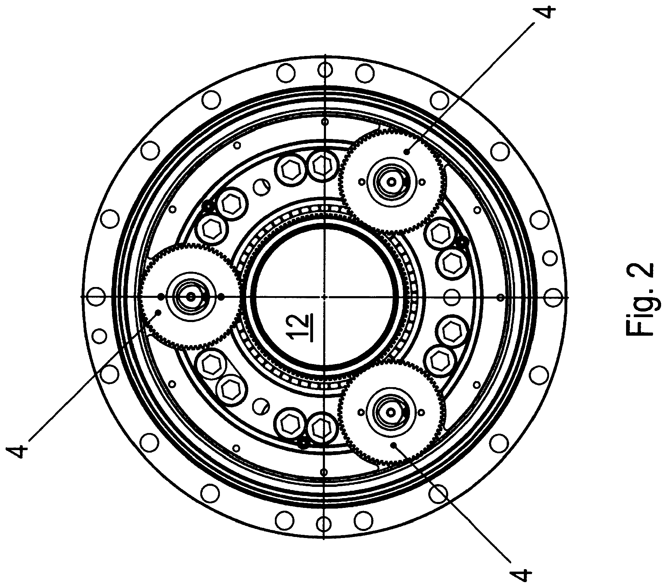

In der Figur 2 ist ein zugehöriger Längsschnitt gezeigt.

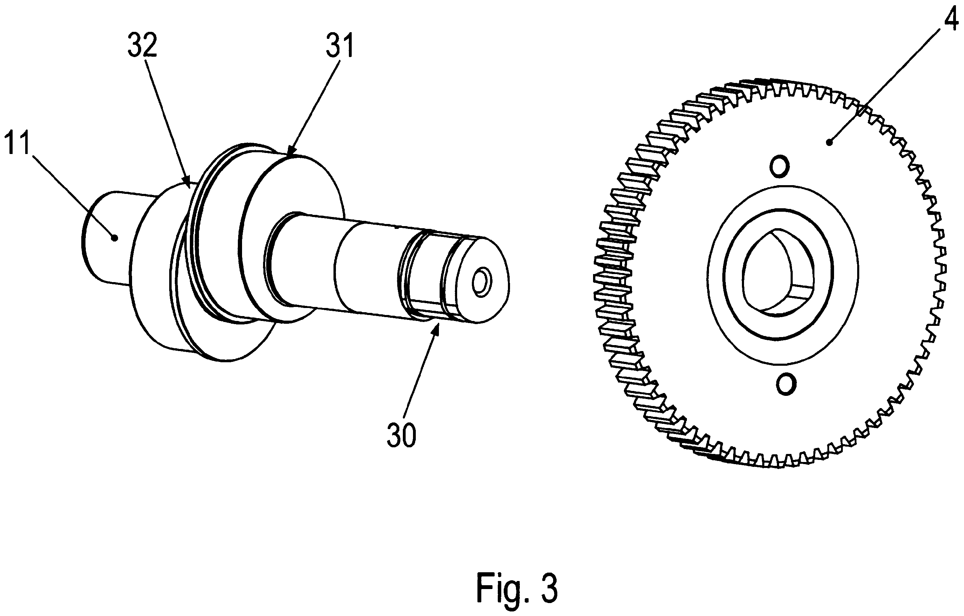

In der Figur 3 ist eine Exzenterwelle 11 und ein mit ihr verbundenes Planetenrad 4 in explodierter Darstellung gezeigt.

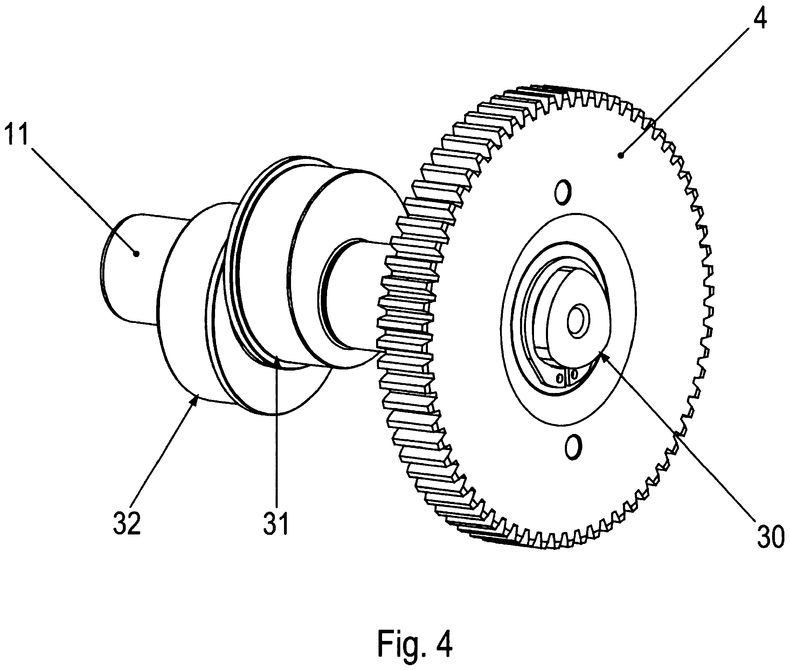

In der Figur 4 ist die zur Figur 3 gehörige nicht explodierte Darstellung gezeigt.

Wie in den Figuren gezeigt, treibt die eintreibende Welle ein Ritzel 3 an, das mit einem Zahnrad 2 im Eingriff ist.

Das Zahnrad 2 ist mit einer Sonnenradwelle 1 drehfest verbunden, die eine Sonnenradverzahnung aufweist oder mit einem Sonnenrad drehfest verbunden ist.

Mit dieser Sonnenradverzahnung sind drei Planetenräder 4 im Eingriff, welche jeweils drehfest mit einer Exzenterwelle 11 verbunden sind. Somit bilden die Sonnenradverzahnung mit den Planetenrädern 4 eine Stirnradverteilgetriebestufe.

Zur drehfesten Verbindung des jeweiligen Planetenrads 4 mit der jeweiligen Exzenterwelle 11 weist die Exzenterwelle 11 einen polygonal geformten axialen Abschnitt auf. Dabei ist das Polygon vorzugsweise gemäß einer Hypotrochoide geformt. Das Planetenrad 4 weist eine entsprechend geformte innenpolygonale Ausnehmung auf und ist aufgesteckt, insbesondere vorzugsweise thermisch aufgeschrumpft, auf die Exzenterwelle 11. Somit ist eine drehfeste spielfreie Verbindung zwischen jeweiligem Planetenrad 4 und jeweiliger Exzenterwelle 11 in einfacher Weise ausgeführt.

Die polygonale Außenkontur der Exzenterwelle 11 ist ohne besonderen Aufwand herstellbar, da die Exzenterwelle zwei von dem axialen Abschnitt beabstandete axiale Abschnitte aufweist, die jeweils als Exzenterkernbereich 31, 32 geformt sind. Hierzu weist jeder Exzenterkernbereich zwar eine kreiszylindrische Außenfläche auf; dabei ist aber die Zylinderachse beabstandet von der Mittelachse der Exzenterwelle 11, wobei die Zylinderachse parallel zur Mittelachse ausgerichtet ist.

Die Exzenterkernbereiche 11 sind axial voneinander beabstandet oder zumindest höchstens berührend angeordnet und weisen einen Versatz in Umfangsrichtung von 180° auf, wobei die Exzenterkernbereiche 11 ansonsten gleichartig ausgeführt sind.

Somit sind die Exzenterkernbereiche 31 und 32 sowie der polygonale Abschnitt mit ein und derselben Werkzeugmaschine, also in einer einzigen Aufspannung, herstellbar. Für die polygonale Außenkontur ergibt sich also kein besonderer Zusatzherstellungsaufwand.

Auf den ersten Exzenterkernbereich 31 ist ein Lager 5 aufgesteckt, das in einem mittig an einer ersten außenverzahnten Scheibe 7 angeordneten Bohrloch aufgenommen ist. Somit ist die erste Scheibe 7 drehbar gelagert auf dem Exzenterkernbereich 31. Die Außenverzahnung der Scheibe 7 ist als Evolventenverzahnung ausgeführt und ist im Eingriff mit der Innenverzahnung eines mit dem Gehäuse verbundenen oder gehäusebildenden Hohlrades 9. Dabei ist auch die Innenverzahnung des Hohlrades 9 als Evolventenverzahnung ausgeführt.

Auf den zweiten Exzenterkernbereich 32 ist ein Lager 15 aufgesteckt, das in einem mittig an einer zweiten außenverzahnten Scheibe 8 angeordneten Bohrloch aufgenommen ist. Somit ist die zweite Scheibe 8 drehbar gelagert auf dem zweiten Exzenterkernbereich 32. Die Außenverzahnung der zweiten Scheibe 8 ist als Evolventenverzahnung ausgeführt und ist ebenfalls im Eingriff mit der Innenverzahnung des Hohlrades 9.

Die Innenverzahnung des Hohlrades 9 erstreckt sich über einen derart weiten axialen Bereich, dass dieser die beiden von den Außenverzahnungen der ersten und der zweiten Scheibe 7, 8 überdeckten axialen Bereiche überdeckt.

Die Exzenterwellen 11 sind drehbar gelagert in der Abtriebswelle 12, wobei die Lageraufnahmen der die Exzenterwellen 11 lagernden Lager 14, 16 radial beabstandet sind von der Mittelachse der Abtriebswelle 12.

Die Abtriebswelle 12 ist mittels Schräglager 10 im Hohlrad 9 gelagert.

### Bezugszeichenliste

- 1: Sonnenradwelle
- 2: Zahnrad
- 3: Ritzel
- 4: Planetenrad
- 5: Lager
- 6: Schräglager
- 7: erste außenverzahnte Scheibe
- 8: zweite außenverzahnte Scheibe
- 9: Hohlrad
- 10: Schräglager
- 11: Exzenterwelle
- 12: Abtriebswelle
- 13: Lager
- 30: polygonaler Abschnitt der Exzenterwelle 11
- 31: erster Exzenterkernbereich
- 32: zweiter Exzenterkernbereich

## Patentansprüche

1. Getriebe mit zumindest einer Exzenterwelle (11), zumindest einer außenverzahnten Scheibe (7, 8) und zumindest einem Umlaufrad, insbesondere Planetenrad (4),
wobei die Exzenterwelle (11) einen Exzenterkernbereich (31, 32) aufweist, auf dem die außenverzahnte Scheibe (7, 8) drehbar gelagert angeordnet ist, insbesondere mittels eines Lagers (5, 15),
wobei die Exzenterwelle (11) einen unrund geformten Abschnitt (30) aufweist, an welchem das Umlaufrad drehfest mit der Exzenterwelle (11) verbunden ist,
wobei der Exzenterkernbereich (31, 32) ein kreiszylindrischer Abschnitt ist, der parallel aber beabstandet, insbesondere also nicht koaxial, zur Mittenachse der Exzenterwelle (11) und/oder des Umlaufrades angeordnet ist,
wobei der unrund geformte Abschnitt axial beabstandet ist vom Exzenterkernbereich (31, 32), wobei die Exzenterwelle (11) drehbar gelagert in einer Abtriebswelle (12) des Getriebes aufgenommen ist, wobei die Achse der Exzenterwelle (11) parallel und beabstandet zur Achse der Abtriebswelle (12) angeordnet ist,
wobei die Abtriebswelle (12) mittels zumindest eines Schräglagers (6, 10) in einem Hohlrad (9) drehbar gelagert ist,
wobei das Umlaufrad mit einer Sonnenradverzahnung im Eingriff ist, die koaxial zur Abtriebswelle (12) angeordnet ist,
wobei das Umlaufrad, die Sonnenradverzahnung und mindestens ein weiteres Umlaufrad eine Stirnradverteilgetriebestufe bilden,
wobei das Umlaufrad eine entsprechend dem unrund geformten Abschnitt geformte Ausnehmung aufweist, so dass das Umlaufrad drehfest und spielfrei mittels des unrund geformten Abschnittes mit der Exzenterwelle (11) verbunden ist,
wobei die Außenverzahnung der Scheibe (7, 8) mit dem Hohlrad (9), das gehäusebildend ist, im Eingriff ist,
**dadurch gekennzeichnet, dass** die Außenverzahnung der Scheibe (7, 8) als Evolventenverzahnung ausgeführt ist, wobei der unrund geformte Abschnitt (30) aus hypotrochoidalen Abschnitten zusammengesetzt ist, wobei die Sonnenradverzahnung drehfest und koaxial zu einem Zahnrad (2) angeordnet ist, das im Eingriff mit einem von einem Elektromotor direkt oder über eine Kupplung angetriebenen Verzahnungsteil, insbesondere Ritzel (3), ist.

2. Getriebe nach Anspruch 1,
**dadurch gekennzeichnet, dass**
die Exzenterwelle (11) einen zweiten Exzenterkernbereich (31, 32) aufweist, der axial beabstandet ist vom ersten Exzenterkernbereich (31, 32) und einen Versatz in Umfangsrichtung von 180° aufweist,
insbesondere wobei die Exzenterkernbereiche (31, 32) gleichartig geformt ausgeführt sind.

3. Getriebe nach mindestens einem der vorangegangenen Ansprüche,
**dadurch gekennzeichnet, dass**
die Exzenterwelle (11) einen **bzw. den** zweiten Exzenterkernbereich (31, 32) aufweist, auf dem eine zweite außenverzahnte Scheibe (7, 8) des Getriebes drehbar gelagert angeordnet ist,
wobei die Außenverzahnung der zweiten Scheibe (7, 8) mit der Innenverzahnung des Hohlrades (9) im Eingriff ist.

## Claims

1. A gear unit with at least one eccentric shaft (11), at least one externally toothed disc (7, 8) and at least one epicyclic wheel, in particular planet wheel (4),
wherein the eccentric shaft (11) has an eccentric core region (31, 32) on which the externally toothed disc (7, 8) is arranged rotatably mounted, in particular by means of a bearing (5, 15),
wherein the eccentric shaft (11) has a non-circular portion (30) on which the epicyclic wheel is connected in rotation-resistant manner to the eccentric shaft (11),
wherein the eccentric core region (31, 32) is a regular-cylindrical portion which is arranged parallel to but spaced apart from, in particular therefore non-coaxially with, the centre line of the eccentric shaft (11) and/or of the epicyclic wheel,
wherein the non-circular portion is axially spaced apart from the eccentric core region (31, 32),
wherein the eccentric shaft (11) is received rotatably mounted in an output shaft (12) of the gear unit, wherein the axis of the eccentric shaft (11) is arranged parallel to and spaced apart from the axis of the output shaft (12),
wherein the output shaft (12) is rotatably mounted in a ring gear (9) by means of at least one angular contact bearing (6, 10),
wherein the epicyclic wheel is engaged with sun gear toothing which is arranged coaxially with the output shaft (12),
wherein the epicyclic wheel, the sun gear toothing and at least one further epicyclic wheel form a spur gear transfer gear stage,
wherein the epicyclic wheel has a cutout formed to correspond to the non-circular portion, so that the epicyclic wheel is connected to the eccentric shaft (11) in rotation-resistant manner and without play by means of the non-circular portion,
wherein the external gearing of the disc (7, 8) is engaged with the ring gear (9), which forms a housing,
**characterised in that** the external gearing of the disc (7, 8) is embodied as involute toothing, the non-circular portion (30) being composed of hypotrochoidal portions, the sun gear toothing being arranged in rotation-resistant manner and coaxially with a gear wheel (2) which is engaged with a toothed part, in particular pinion (3), driven by an electric motor directly or by way of a coupling.

2. A gear unit according to Claim 1,
**characterised in that**
the eccentric shaft (11) has a second eccentric core region (31, 32) which is axially spaced apart from the first eccentric core region (31, 32) and has an offset in the peripheral direction of 180°,
in particular with the eccentric core regions (31, 32) being embodied shaped similarly.

3. A gear unit according to at least one of the preceding claims,
**characterised in that**
the eccentric shaft (11) has a or the second eccentric core region (31, 32), on which a second externally toothed disc (7, 8) of the gear unit is arranged rotatably mounted,
wherein the external gearing of the second disc (7, 8) is engaged with the internal gearing of the ring gear (9).

## Revendications

1. Transmission pourvue d'au moins un arbre excentrique (11), d'au moins un disque à denture extérieure (7, 8) et d'au moins une roue planétaire, en particulier un satellite (4),
dans laquelle l'arbre excentrique (11) présente une zone centrale excentrique (31, 32) sur laquelle le disque à denture extérieure (7, 8) est monté rotatif, en particulier au moyen d'un palier (5, 15),
dans laquelle l'arbre excentrique (11) présente une partie de forme non circulaire (30) sur laquelle la roue planétaire est reliée à l'arbre excentrique (11) de manière solidaire en rotation,
dans laquelle la zone centrale excentrique (31, 32) est une partie cylindrique circulaire qui est disposée parallèlement mais à distance, en particulier non coaxialement, à l'axe médian de l'arbre excentrique (11) et/ou de la roue planétaire,
dans laquelle la partie de forme non circulaire est espacée axialement de la zone centrale excentrique (31, 32),
dans laquelle l'arbre excentrique (11) est monté rotatif dans un arbre de sortie (12) de la transmission,
dans laquelle l'axe de l'arbre excentrique (11) est disposé parallèlement et à distance de l'axe de l'arbre de sortie (12),
dans laquelle l'arbre de sortie (12) est monté rotatif dans une couronne dentée (9) au moyen d'au moins un palier à contact oblique (6, 10),
dans laquelle la roue planétaire est en prise avec une denture de roue solaire qui est disposée coaxialement à l'arbre de sortie (12),
dans laquelle la roue planétaire, la denture de roue solaire et au moins une autre roue planétaire forment un étage de boîte de transfert à roues droites,
dans laquelle la roue planétaire présente un évidement de forme correspondant à la partie de forme non circulaire, de sorte que la roue planétaire est reliée à l'arbre excentrique (11) de manière solidaire en rotation et sans jeu au moyen de la partie de forme non circulaire,
dans laquelle la denture extérieure du disque (7, 8) est en prise avec la couronne dentée (9) qui forme un boîtier,
**caractérisée en ce que** la denture extérieure du disque (7, 8) est réalisée sous la forme d'une denture en développante de cercle, dans laquelle la partie de forme non circulaire (30) est composée de parties hypotrochoïdales, dans laquelle la denture de roue solaire est disposée de manière solidaire en rotation et coaxialement à une roue dentée (2) qui est en prise avec une partie dentée, en particulier un pignon (3), entraînée directement ou par l'intermédiaire d'un embrayage par un moteur électrique.

2. Transmission selon la revendication 1,
**caractérisé en ce que**
l'arbre excentrique (11) présente une deuxième zone centrale excentrique (31, 32) qui est espacée axialement de la première zone centrale excentrique (31, 32) et présente un décalage de 180° dans la direction circonférentielle,
en particulier dans laquelle les zones centrales excentriques (31, 32) sont réalisées avec une forme similaire.

3. Transmission selon au moins l'une des revendications précédentes,
**caractérisée en ce que**
l'arbre excentrique (11) présente une ou la deuxième zone centrale excentrique (31, 32) sur laquelle un deuxième disque à denture extérieure (7, 8) de la transmission est monté rotatif,
dans laquelle la denture extérieure du deuxième disque (7, 8) est en prise avec la denture intérieure de la couronne dentée (9).
